# EUROPEAN PATENT APPLICATION

(11) **EP 4 670 482 A1**
(43) Date of publication of application: **31.12.2025**
(21) Application number: 25172942.2
(22) Date of filing: 28.04.2025
(51) Int. Cl.: A01D 34/64, A01D 34/66

(54) **WORK MACHINE**

(30) Priority: 27.06.2024 JP 2024104412
(71) Applicant: Kubota Corporation, Osaka-shi, Osaka 556-8601 (JP)
(72) Inventor: KOYAMA, Yoichiro, SAKAI-SHI, OSAKA, 5900908 (JP); HASHIWAKI, Kentaro, SAKAI-SHI, OSAKA, 5900908 (JP); YASUKAWA, Kosuke, SAKAI-SHI, OSAKA, 5900908 (JP); TOGOSHI, Yoshikazu, SAKAI-SHI, OSAKA, 5900908 (JP)
(74) Representative: Cabinet Beau de Loménie

(57) **Abstract**

A work machine to which a mower unit (4) is attachable includes: a lifting and lowering link mechanism (3) including a front link unit (FL) and a rear link unit (RL) apart from each other in a front-rear direction relative to the body; a front coupler (5C) configured to be coupled to a first end of the front link unit (FL); a rear coupler (6B) configured to be coupled to a first end of the rear link unit (RL); a blade housing (40) coupled to a second end of the front link unit (FL); an intermediate frame (MF) coupled to a second end of the rear link unit (RL); a first engagement unit (7A) provided for the intermediate frame (MF); a second engagement unit (7B) provided for the blade housing (40) and engageable with the first engagement unit (7A); and a lock mechanism (LM) configured to lock the engagement between the first engagement unit (7A) and the second engagement unit (7B).

## Description

### BACKGROUND OF THE INVENTION

### Field of the Invention

The present invention relates to a work machine.

### Description of the Related Art

JP 2017-169507 A discloses a mower including a lifting/lowering link mechanism fixed to the mower body, a first engagement section provided for the lifting/lowering link mechanism, a mower deck, and a second engagement section provided for the mower deck. The first and second engagement sections are engageable with each other in response to the mower body moving in the front-rear direction. With the first and second engagement sections engaged with each other, the driver stops the mower body, exits the mower body, and swings an operation lever lateral to the mower deck. This couples a blade motive power transmission mechanism to the mower in such a manner as to allow the mower to transmit motive power to the blade motive power transmission mechanism, and also locks a lock mechanism configured to lock the coupling of the mower deck to the mower body.

The mower disclosed in JP 2017-169507 A is configured such that moving the mower body to climb over the mower deck allows the mower body and the mower deck to be appropriately positioned relative to each other to lock the coupling of the mower deck to the mower body for the attachment of the mower deck to the mower body. Locking the coupling, however, involves the driver stopping the mower body, exiting the mower body, and moving the operation lever. Stopping the mower body and moving the operation lever to manually lock the coupling unfortunately means that moving the mower body is not sequentially followed by locking the coupling for the attachment of the mower deck to the mower body.

The present invention has an object of providing a work machine configured to overcome the above issue such that driving the work machine is sequentially followed by locking the coupling of a mower deck to the work machine for the attachment of the mower deck to the work machine.

### SUMMARY OF THE INVENTION

A work machine according to the present invention is a work machine including a body, a front wheel (2a), and a rear wheel (2b) to which work machine a mower unit (4) is attachable below the body and between the front wheel (2a) and the rear wheel (2b), the work machine including:
a lifting and lowering link mechanism (3) including a front link unit (FL) and a rear link unit (RL) apart from each other in a front-rear direction relative to the body;
a front coupler (5C) provided for the body and configured to be coupled to a first end of the front link unit (FL);
a rear coupler (6B) provided for the body and configured to be coupled to a first end of the rear link unit (RL);
a blade housing (40) coupled to a second end of the front link unit (FL);
an intermediate frame (MF) coupled to a second end of the rear link unit (RL);
a first engagement unit (7A) provided for the intermediate frame (MF);
a second engagement unit (7B) provided for the blade housing (40) and engageable with the first engagement unit (7A); and
a lock mechanism (LM) configured to lock the engagement between the first engagement unit (7A) and the second engagement unit (7B) automatically in response to the front wheel (2a) climbing over the blade housing (40) to move the first engagement unit (7A) and the second engagement unit (7B) relative to each other.

With the above configuration, driving the work machine to climb over the blade housing moves the machine body and the blade housing relative to each other to engage the first and second engagement units with each other. The relative movement causes the lock mechanism to lock the engagement automatically (or mechanically). This allows driving the work machine to be sequentially followed by locking the engagement for the attachment of the mower deck to the machine body without the need for the driver to exit the work machine and manually lock the engagement. This in turn allows the mower deck to be attached to the machine body rapidly and easily. With the mower unit attached, the work machine functions as a mower, whereas without the mower unit, the work machine serves its original function, meaning that the present invention is directed to a work machine and a mower.

As one preferred embodiment of the present invention, the work machine further includes:
a double lock mechanism (DM) configured to maintain a locking state of the lock mechanism (LM) locking the engagement between the first engagement unit (7A) and the second engagement unit (7B) through a movement for maintaining the locking state of the lock mechanism (LM) in response to the lock mechanism (LM) being moved to lock the engagement automatically in response to the front wheel (2a) climbing over the blade housing (40).

The above configuration moves the lock mechanism to lock the engagement between the first and second engagement units and utilizes the movement for the double lock mechanism to lock the locking state of the lock mechanism. In other words, moving the machine body and the blade housing relative to each other moves the lock mechanism to lock the engagement, which in turn causes the double lock mechanism to lock the locking state of the lock mechanism. This allows the lock mechanism to lock the engagement efficiently and the double lock mechanism to lock the locking state efficiently.

As one preferred embodiment of the present invention, the work machine is further configured such that
the lock mechanism (LM) includes a rotary member (81) rotatable in response to the relative movement,
the second engagement unit (7B) includes an engager,
the rotary member (81) includes an engagement section (81a) engageable with the engager in response to the rotation of the rotary member (81),
the lock mechanism (LM) is configured to lock the engagement between the engagement section (81a) and the engager for the locking state, and
the double lock mechanism (DM) includes:
   a rotor (83) rotatable in synchronization with the rotation of the rotary member (81); and
   a lock body (84) movable into a lock position in response to the rotation of the rotor (83) in which lock position the lock body (84) locks the rotary member (81) such that the double lock mechanism (DM) maintains the locking state.

The above configuration involves a rotational member configured to transmit the relative movement of the machine body and the blade housing to the lock mechanism to move the lock mechanism for locking the engagement between the first and second engagement units and also to the double lock mechanism to move the double lock mechanism for locking the locking state of the lock mechanism. This allows the lock mechanism to lock the engagement efficiently and the double lock mechanism to lock the locking state efficiently with fewer members than conventional.

As one preferred embodiment of the present invention, the work machine is further configured such that
the lock body (84) is elastically urged toward the lock position and is in the lock position with the rotor (83) at a predetermined rotation angle position.

With the above configuration, the lock body is elastically urged toward the lock position. This allows the double lock mechanism to lock the locking state more reliably.

As one preferred embodiment of the present invention, the work machine is further configured such that
the second engagement unit (7B) includes a press member (98) fixed to the blade housing (40), and
the rotary member (81) is rotatable through contact with the press member (98) and movable off the press member (98) in response to the lock body (84) being moved into the lock position.

The above configuration involves contact between the rotary member and the press member to reliably convert the relative movement of the machine body and the blade housing to the rotation of the rotary member. Further, the movement of the lock body to the lock position moves the rotary member off the press member to prevent unnecessary force from being applied to the rotary member. In other words, the movement of the lock body to the lock position causes the lock mechanism to lock the engagement, causes the double lock mechanism to lock the locking state, and moves the rotary member off the press member.

The above-mentioned and other embodiments, procedures, features, and effects of the present invention will be more apparent from the following detailed description of the embodiments with reference to the drawings.

### BRIEF DESCRIPTION OF THE DRAWINGS

Embodiments of the present invention will be described with reference to the following drawings.
Fig. 1 is a diagram schematically illustrating how a mower unit is attached to a work machine.
Fig. 2 is a side view of a work machine with a mower unit attached.
Fig. 3 is a side view of a front link unit, a machine body, and a blade housing, illustrating how the front link unit is coupled to the machine body and the blade housing.
Fig. 4 is a plan view of a blade housing with an intermediate frame coupled.
Fig. 5 is a perspective view of an intermediate frame.
Fig. 6 is an exploded perspective view of an intermediate frame.
Fig. 7 is a perspective view of a blade housing to be coupled to a front link unit.
Fig. 8 is a side view of a front link unit coupled to a blade housing and to be coupled to a machine body.
Fig. 9 is a side view of a front link unit coupled to a blade housing and during an initial stage of being coupled to a machine body.
Fig. 10 is a side view of a front link unit coupled to a blade housing and during an intermediate stage of being coupled to a machine body.
Fig. 11 is a side view of a front link unit coupled to a blade housing and during a final stage of being coupled to a machine body.
Fig. 12 is a side view of an intermediate frame and a blade housing immediately before being locked.
Fig. 13 is a side view of an intermediate frame and a blade housing, the intermediate frame approaching the blade housing.
Fig. 14 is a plan view of an intermediate frame and a blade housing, the intermediate frame approaching the blade housing.
Fig. 15 is an exploded perspective view of a rear link unit and an intermediate frame.
Fig. 16 is a side view of an intermediate frame and a blade housing immediately before being locked.
Fig. 17 is a front view of a pair of left and right lock mechanisms and a pair of left and right double lock mechanism before locking.
Fig. 18 is a side view of a lock mechanism and a double lock mechanism, illustrating how the lock mechanism and the double lock mechanism move.
Fig. 19 is a side view of a lock mechanism and a double lock mechanism, illustrating how the lock mechanism and the double lock mechanism move.
Fig. 20 is a side view of a lock mechanism and a double lock mechanism, illustrating how the lock mechanism and the double lock mechanism move.
Fig. 21 is a front view of a pair of left and right lock mechanisms and a pair of left and right double lock mechanism after locking.
Fig. 22 is a perspective view of an alternative to the coupling plate illustrated in Fig. 4.

### DETAILED DESCRIPTION OF THE PREFERRED EMBODIMENTS

The description below deals with a work machine as an embodiment of the present invention. Unless otherwise stated, the description of the present embodiment uses (i) terms such as "forward" to refer to the front direction in terms of the front-rear direction (traveling direction) of the work machine, (ii) terms such as "rearward" to refer to the rearward direction in terms of the front-rear direction of the work machine, (iii) terms such as "left-right direction" and "lateral direction" to refer to the transverse direction (width direction) of the work machine, which is orthogonal to the forward-travel direction of the work machine, and (iv) terms such as "upward" and "downward" to refer to a position in the vertical direction of the work machine, that is, a height from the ground.

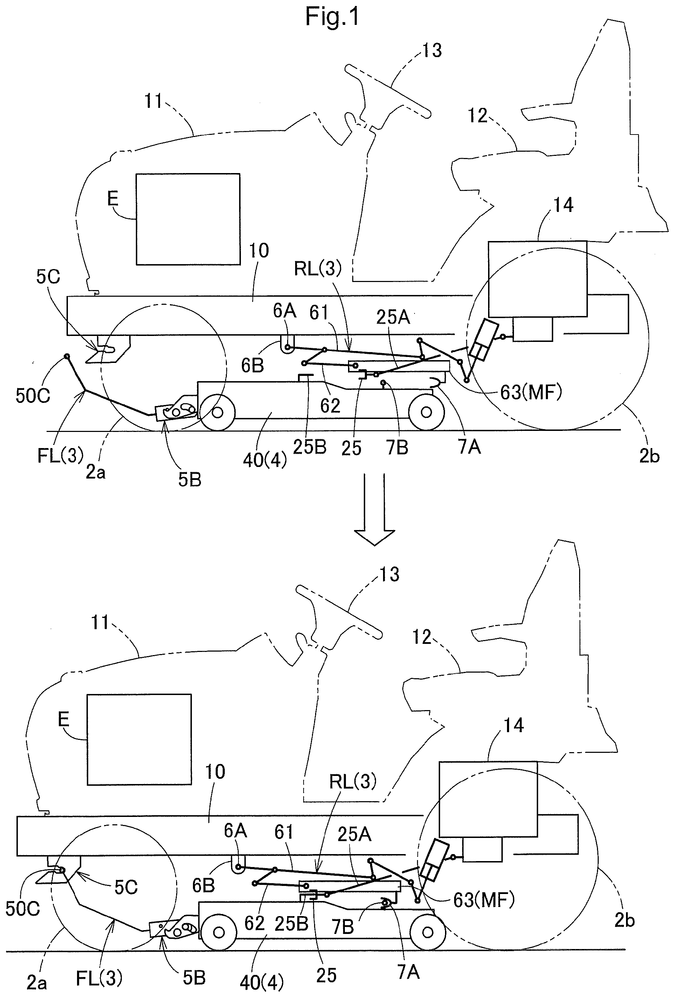

Fig. 1 schematically illustrates how a mower unit 4 is attached to the work machine. The work machine includes a main frame 10, front wheels 2a, and rear wheels 2b. Driving the work machine over the mower unit 4 on the ground automatically attaches the mower unit 4 to the work machine under the main frame 10 and between the front wheels 2a and the rear wheels 2b. With the mower unit 4 attached, the work machine functions as a mower, whereas without the mower unit 4, the work machine serves its original function. The description of the present embodiment uses the term "machine body" to refer to the main frame 10 or the basic configuration of the work machine as long as they do not need to be discriminated from each other.

The work machine includes a lifting/lowering link mechanism 3 disposed between the machine body and the mower unit 4 for the attachment and including a front link unit FL and a rear link unit RL.

The work machine is provided with an intermediate frame MF. The rear link unit RL has a first end coupled to rear couplers 6B of the main frame 10 and a second end coupled to the intermediate frame MF such that the intermediate frame MF is suspended from the rear link unit RL. The intermediate frame MF includes a machine-side power transmission mechanism 25A configured to transmit rotation motive power from the engine E of the work machine to the mower unit 4 and having a leading end provided with a motive power coupling unit 25. The intermediate frame MF includes a first engagement unit 7A configured to become coupled to the mower unit 4.

The mower unit 4 includes a blade housing 40 provided with a mower-side coupling unit 5B coupled thereto and a second engagement unit 7B engageable with the first engagement unit 7A of the intermediate frame MF. The mower unit 4 includes a mower-side power transmission mechanism 25B with an input shaft 25b. The attachment process couples the machine-side power transmission mechanism 25A to the input shaft 25b with the motive power coupling unit 25 in-between in such a manner as to enable transmission of motive power. The attachment process also couples the first engagement unit 7A of the intermediate frame MF to the second engagement unit 7B of the blade housing 40. This allows the blade housing 40 to be coupled to the intermediate frame MF.

The main frame 10 has a front portion provided with a machine-side coupling unit 5C (front coupler). The front link unit FL has a first end provided with a machine body coupler 50C. The attachment process couples the machine body coupler 50C to the machine-side coupling unit 5C.

Moving the lifting/lowering link mechanism 3 lifts and lowers the intermediate frame MF and the blade housing 40 relative to the ground.

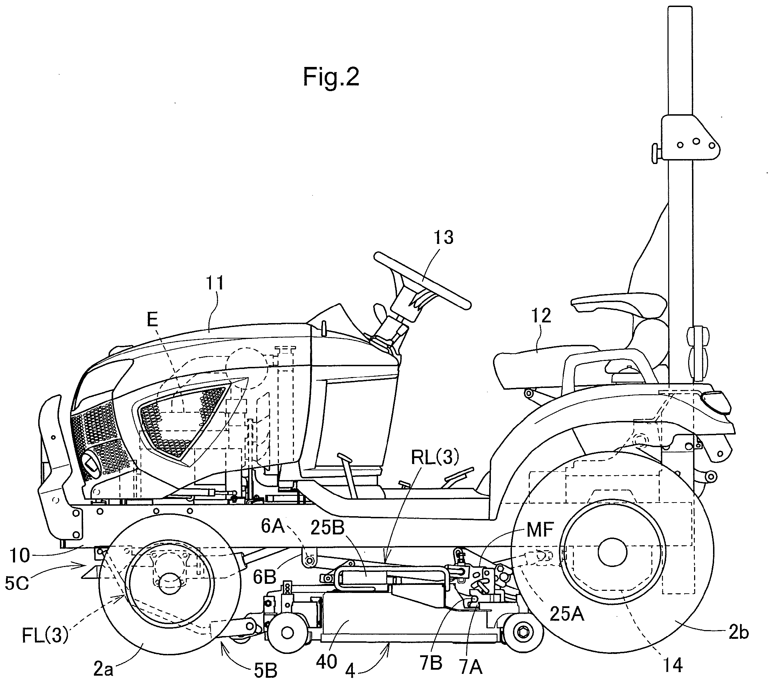

Fig. 2 illustrates the work machine as an embodiment in the form of a multipurpose tractor including front wheels 2a and rear wheels 2b and provided with an attachable and detachable mower unit 4 between the front wheels 2a and the rear wheels 2. Detaching the mower unit 4 from the work machine allows the work machine to function as a common tractor. The work machine includes a hood 11 and a water-coolable engine E disposed on a front half of the main frame 10 and covered by the hood 11. The work machine includes a driver's seat 12 and a transmission case 14 on a rear half of the main frame 10. The work machine includes a steering wheel 13 for use to turn the front wheels 2a. The front wheels 2a are driving wheels, so are the rear wheels 2b, meaning that the work machine is a four-wheel drive vehicle.

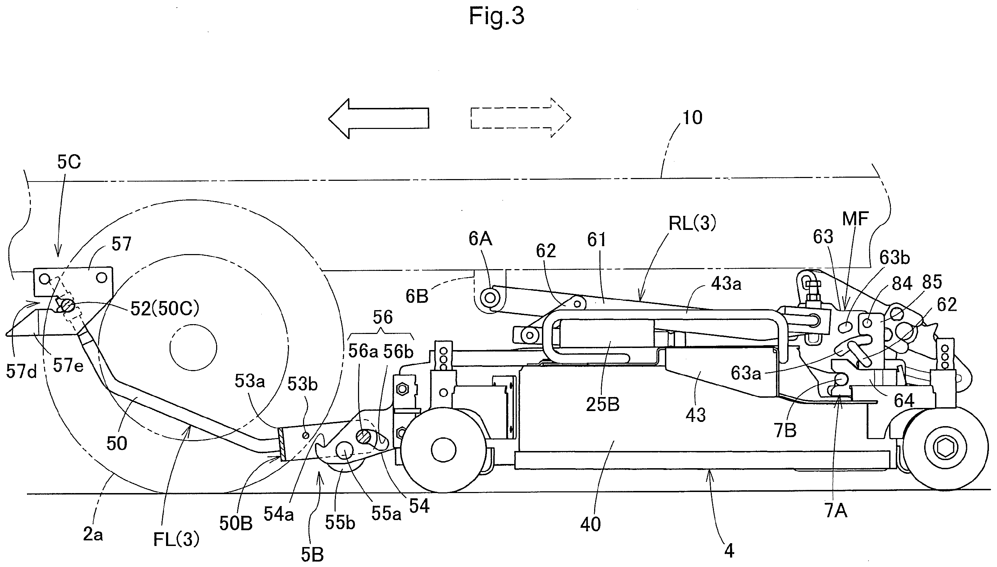

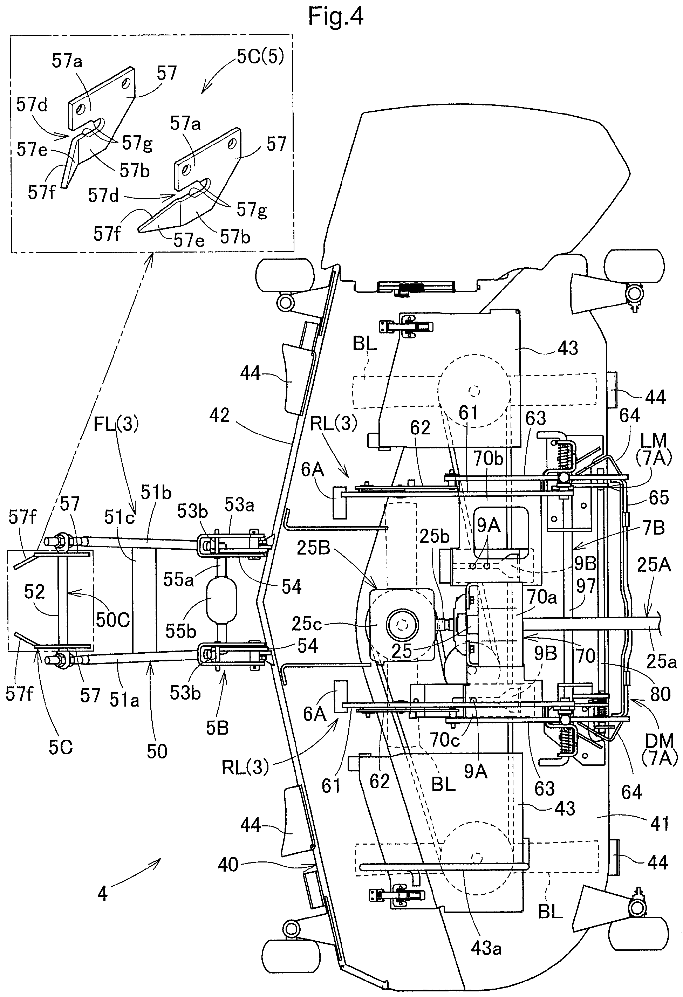

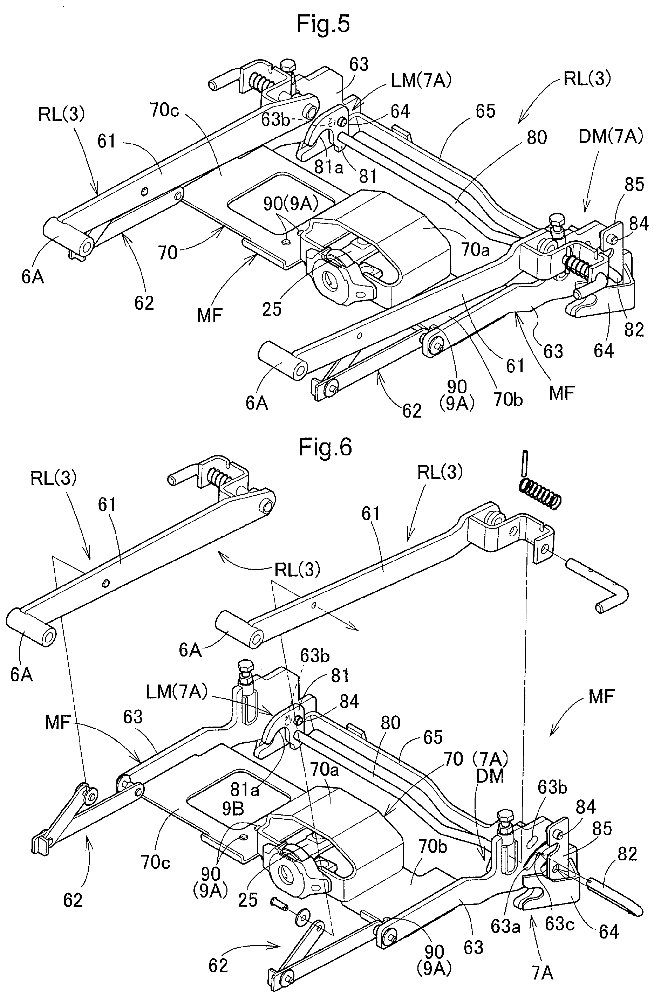

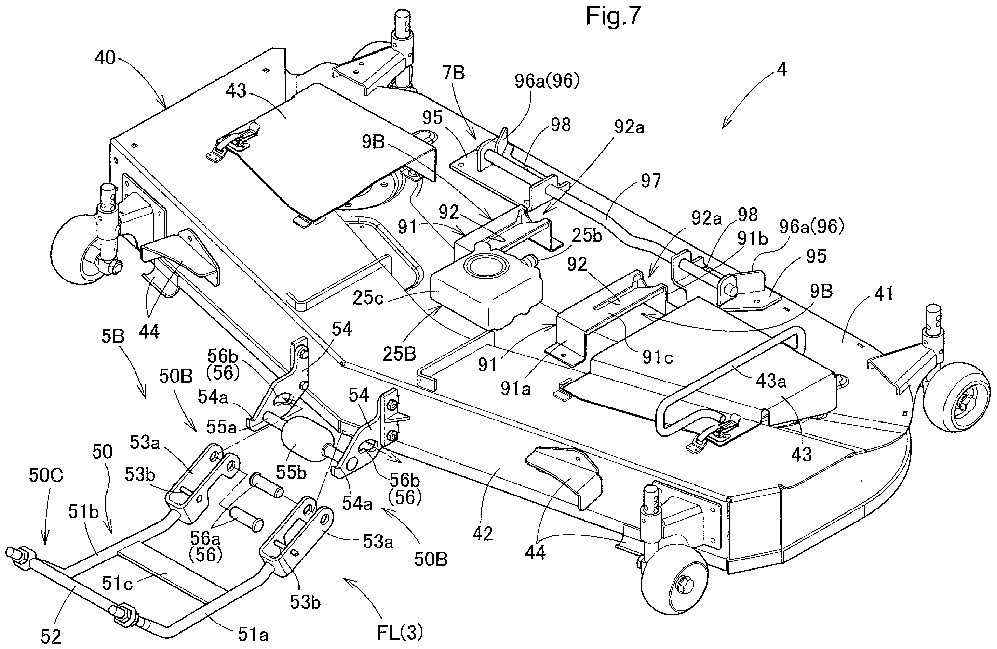

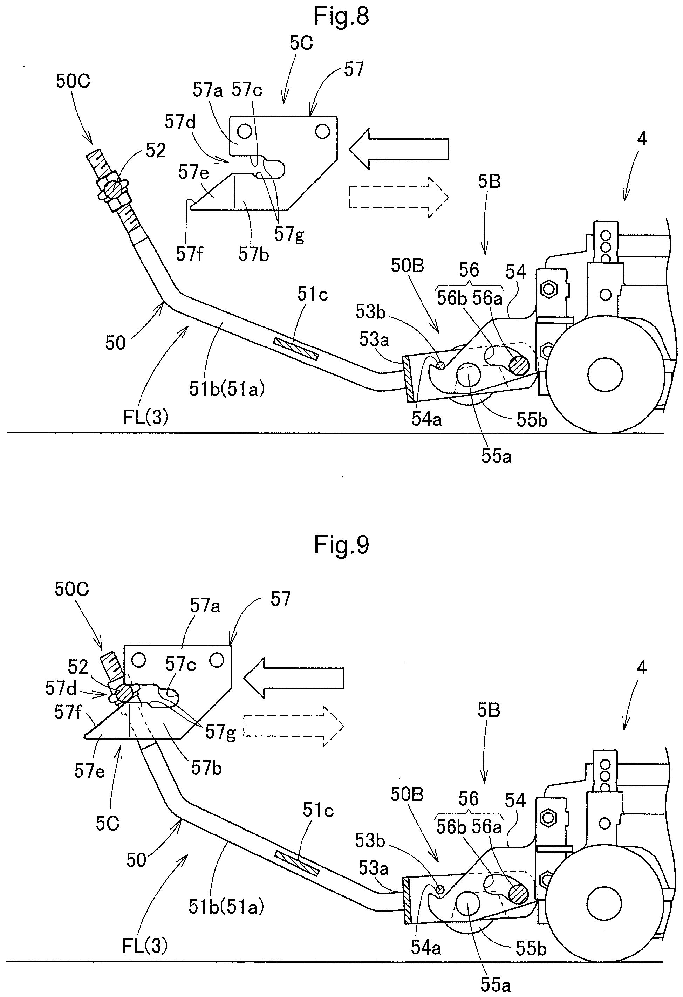

Figs. 3 and 4 each illustrate the mower unit 4 as coupled to the front link unit FL and the intermediate frame MF as coupled to the rear link unit RL. Fig. 5 illustrates the intermediate frame MF as coupled to the rear link unit RL. Fig. 6 illustrates the rear link unit RL and the intermediate frame MF in an exploded manner. Fig. 7 illustrates the blade housing 40, which is included in the mower unit 4. Figs. 8 to 11 illustrate how the front link unit FL as coupled to the blade housing 40 becomes coupled to the machine-side coupling unit 5C.

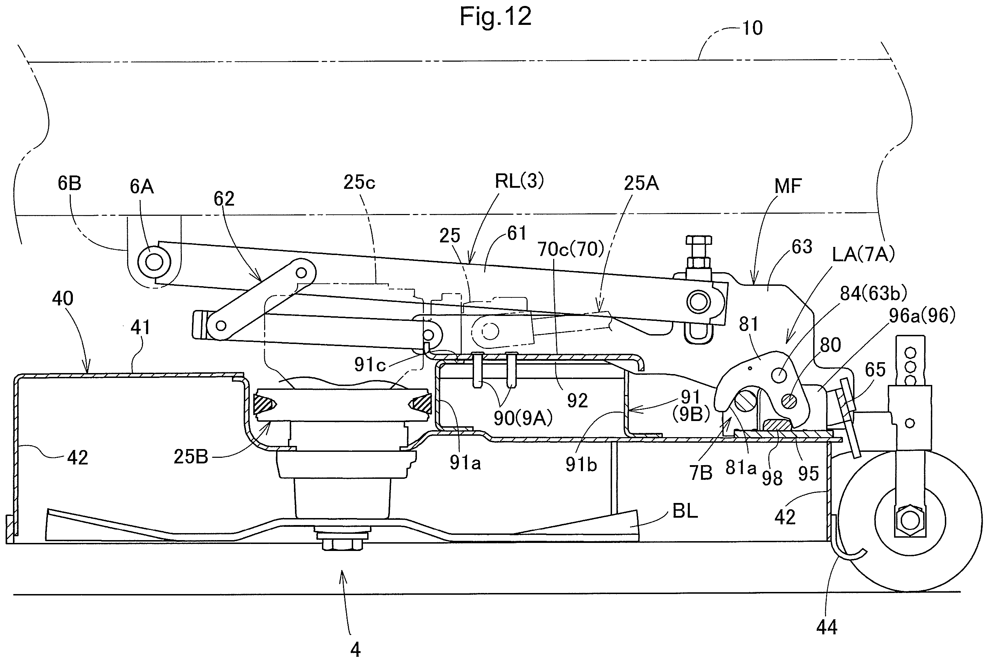

As illustrated in Fig. 4, the mower unit 4 includes a blade housing 40 and blades BL (see Fig. 12) covered by the blade housing 40 from above and rotatable by motive power from the mower-side power transmission mechanism 25B. The present embodiment includes three blades BL arranged in the transverse direction of the work machine in a plan view. The blade housing 40 includes a top plate 41 and side plates 42 each extending downward from the edge of the top plate 41. The mower-side power transmission mechanism 25B is on the top plate 41 and includes an input shaft 25b and a motive power distributing mechanism 25c. The blade housing 40 has a cut grass conveying path inside and is configured to discharge cut grass from its right end.

As illustrated in Fig. 7, the mower unit 4 includes a pair of left and right ride-over covers 43 disposed on the top plate 41 and apart from each other by a distance equivalent to the tread width of the front wheels 2a and the rear wheels 2b. The ride-over covers 43 serve to protect the components of the mower unit 4 from the front wheels 2a when the work machine travels over the blade housing 40 (or the mower unit 4) on the ground. The left ride-over cover 43 has a guide rod 43a over its upper face. The mower unit 4 includes a pair of left and right ride-over steps 44 disposed on a side plate 42 (front plate) and apart from each other by a distance equivalent to the tread width of the front wheels 2a and the rear wheels 2b. The ride-over steps 44 serve to assist the front wheels 2a in climbing over the blade housing 40.

The mower unit 4 includes a second engagement unit 7B and a pair of left and right guides 9B on the top plate 41. The intermediate frame MF becomes coupled to the blade housing 40 as the second engagement unit 7B becomes coupled to the first engagement unit 7A of the intermediate frame MF, and the guides 9B guide the intermediate frame MF to an appropriate position relative to the blade housing 40. The mower unit 4 includes a mower-side coupling unit 5B disposed on a side plate 42 (front plate) and configured to become coupled to the front link unit FL.

As illustrated in Fig. 7, the guides 9B each include a pair of left and right convex brackets 91 each including a front leg plate 91a, a rear leg plate 91b, and an upper plate 91c connecting the respective upper ends of the front and rear leg plates 91a and 92b. The convex brackets 91 each have a guide groove 92 extending from an upper area of the rear leg plate 91b over a major portion of the upper plate 91c. The intermediate frame MF includes as guidable members 9A two guidable pins 90 (see Fig. 6) each guidable along the corresponding guide groove 92.

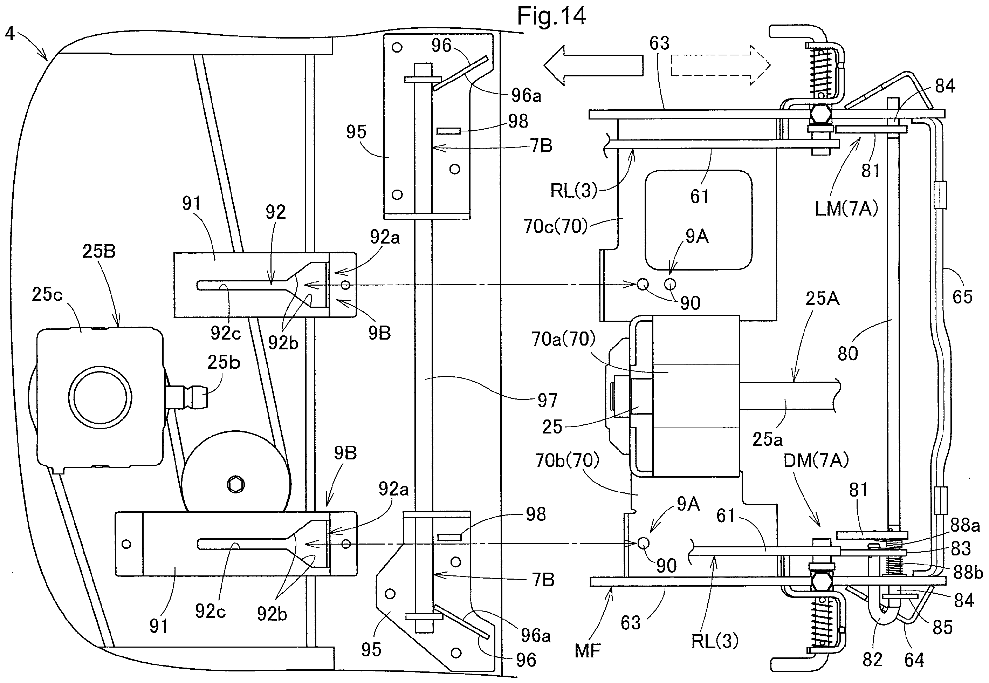

As illustrated in Figs. 7 and 14, each guide groove 92 has a three-dimensional opening 92a, an inclined guide face area 92b, and a linear guide face area 92c. The three-dimensional opening 92a is present in a rear area of the guide groove 92 and configured to receive the corresponding guidable pin 90. The three-dimensional opening 92a is so large in area as to facilitate the entry of the guidable pin 90. The inclined guide face area 92b has a width that decreases from the three-dimensional opening 92a toward the terminal end of the guide groove 92. The linear guide face area 92c has a width substantially equal to that of the guidable pin 90.

The second engagement unit 7B serves to couple the intermediate frame MF to the blade housing 40. As illustrated in Fig. 7, the second engagement unit 7B includes a pair of left and right base brackets 95, a pair of left and right vertical brackets 96, and a lock rod 97. The base brackets 95 each include a pair of laterally opposite vertical webs with respective bearing holes through which the lock rod 97 extends. The lock rod 97 is apart from the top plate 41 of the blade housing 40 and serves to lock the intermediate frame MF as described later. The base brackets 95 are fixed to the top plate 41 and have respective horizontal plates to which the vertical brackets 96 are fixed. The vertical brackets 96 each include a plate-shaped lateral loosening preventer 96a extending rearward and bent outward. The second engagement unit 7B includes a pair of left and right press members 98 (described later) fixed to the respective horizontal plates.

The description below deals with the rear link unit RL and the intermediate frame MF with reference to Figs. 5 and 6. The rear link unit RL and the intermediate frame MF share at least one component. The rear link unit RL includes a pair of left and right rear main links 61 and a pair of left and right link bases 63 each in the form of a flat plate.

The rear link unit RL includes a pair of left and right link couplers 6A each disposed at a first end of one of the rear main links 61 and configured to become coupled to the main frame 10 in such a manner that the rear link unit RL is swingable about a lateral axis. The link couplers 6A are each in the form of a sleeve with a lateral shaft. The main frame 10 includes a pair of left and right rear couplers 6B configured to become coupled to the respective link couplers 6A each with use of a pin. The rear main links 61 each have a second end coupled to an intermediate area of the corresponding link base 63.

The rear link unit RL includes a pair of left and right orientation holding links 62 each provided between a front-end area of the corresponding rear main link 61 and a front end of the corresponding link base 63. The orientation holding links 62 are each a folding link including two link sections swingably coupled to each other. The orientation holding links 62 are designed in relation to the structure of the intermediate frame MF in such a manner as not to become open over a predetermined folding angle, that is, a maximum opening angle, which defines an appropriate orientation. The orientation holding links 62 (or the maximum opening angle of the folding link) determines the limit of how far the intermediate frame MF is swingable downward by gravity. With the folding link at the maximum opening angle, the intermediate frame MF has an appropriate orientation, that is, the intermediate frame MF is oriented suitably to become coupled to the blade housing 40. Lifting the intermediate frame MF bends the orientation holding links 62 in synchronization. The intermediate frame MF is freely liftable.

The intermediate frame MF includes a pair of left and right link bases 63, a cover plate 70 as a cross member for the link bases 63, and a cross bar 65 coupling the respective rear ends of the link bases 63. The cover plate 70 includes an arch 70a, a left wing 70b connected to the left end of the arch 70a and the left link base 63, and a right wing 70c connected to the right end of the arch 70a and the right link base 63. The motive power coupling unit 25 is fixed to the lower face of the arch 70a and couples the input shaft 25b of the mower-side power transmission mechanism 25B to the output shaft 25a of the machine-side power transmission mechanism 25A. The intermediate frame MF includes as a guidable member 9A a guidable pin 90 fixed to the left wing 70b and protruding downward. The intermediate frame MF includes as guidable members 9A two guidable pins 90 fixed to the right wing 70c, protruding downward, and apart from each other in the front-rear direction. The intermediate frame MF includes a pair of left and right guide plates 64 on the respective outer faces of the respective rear ends of the link bases 63.

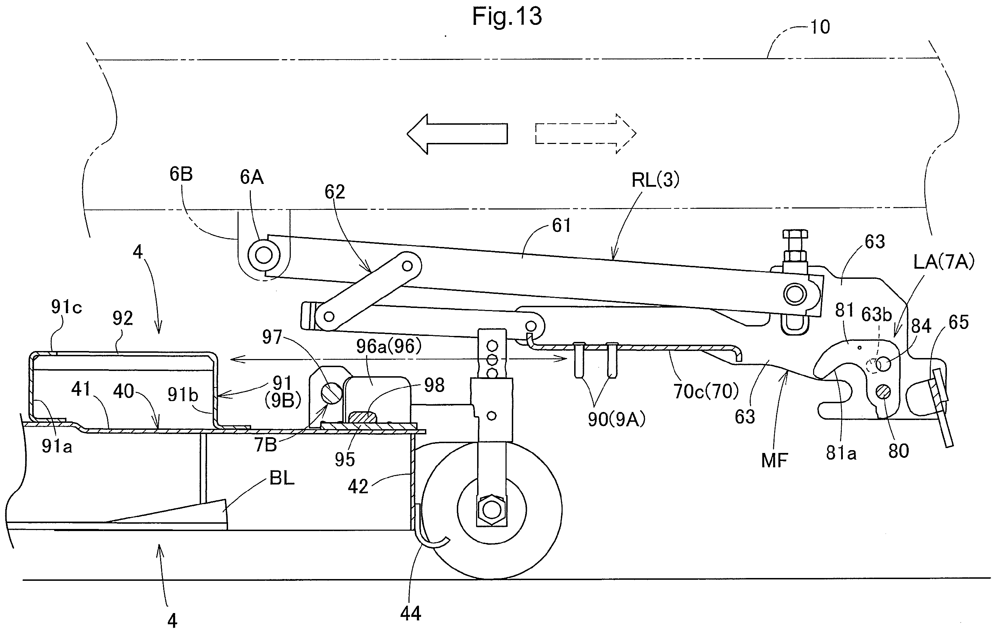

As illustrated in Figs. 12 to 14, the orientation holding links 62 holding the rear link unit RL in an appropriate orientation allows the guidable pins 90 to accurately enter the respective guide grooves 92 in the guides 9B of the blade housing 40. Specifically, the guidable pins 90 face the respective guide grooves 92 in the front-rear direction and thereby smoothly enter the respective guide grooves 92, so that the intermediate frame MF becomes coupled to the blade housing 40. Further, the left and right wings 70b and 70c have respective lower faces in contact with the respective upper plates 91c of the convex brackets 91, so that the intermediate frame MF has an appropriate height relative to the blade housing 40.

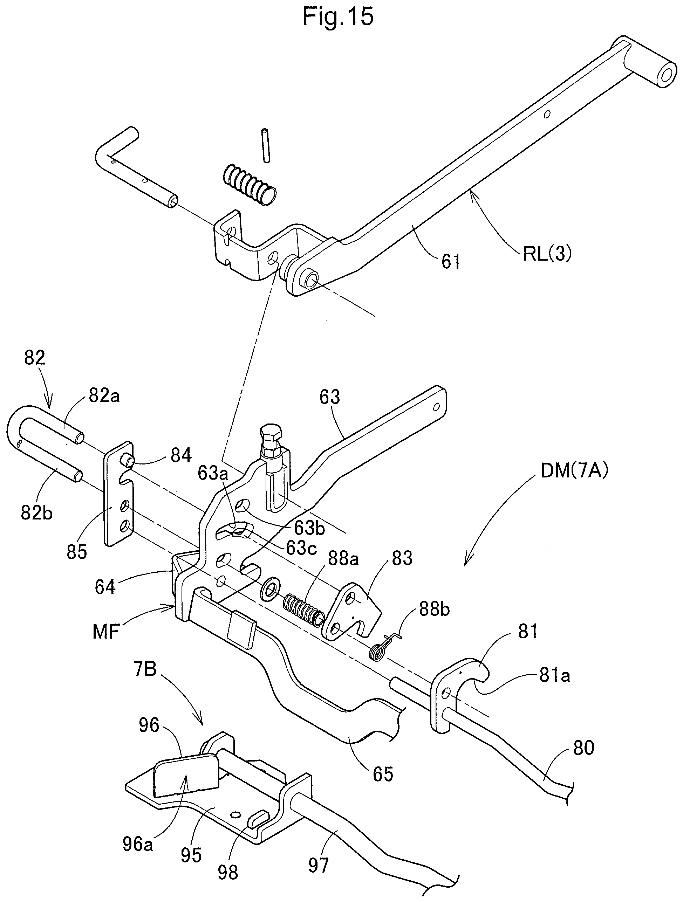

As illustrated in Figs. 5 and 6, the first engagement unit 7A includes a lock mechanism LM in a corner area formed by one of the link bases 63 and the cross bar 65 and a double lock mechanism DM attached to the lock mechanism LM. Fig. 15 is an exploded view of the lock mechanism LM and the double lock mechanism DM. The double lock mechanism DM is configured to maintain the locking state of the lock mechanism LM to doubly lock the coupling between the intermediate frame MF and the blade housing 40. The lock mechanism LM automatically locks the coupling in response to the front wheels 2a climbing over the blade housing 40 on the ground to move the first and second engagement units 7A and 7B relative to each other. The rear link unit RL includes a rotary member 81, a rotor 83, a lock body 84, and a swing lever 85. The configuration allows a worker to operate the swing lever 85 to remove the lock body 84 from a through hole 63b in the corresponding link base 63 and rotate the rotary member 81 and the rotor 83 to unlock the lock mechanism LM. The unlocking process is at least partially performable on the basis of the movement of the first and second engagement units 7A and 7B relative to each other (or travel of the work machine). Specifically, the double lock mechanism DM is substantially configured to automatically maintain the locking state of the lock mechanism LM on the basis of the lock mechanism LM being moved (that is, a movement for automatic locking or a locking state maintaining movement) in response to the front wheels 2a climbing over the blade housing 40. The double lock mechanism DM is also configured to unlock the lock mechanism LM in response to an automatic locking movement of the lock mechanism LM in the opposite direction. In other words, the lock mechanism LM and the double lock mechanism DM ensure that the intermediate frame MF is automatically locked to the blade housing 40 at a predetermined position relative to the blade housing 40.

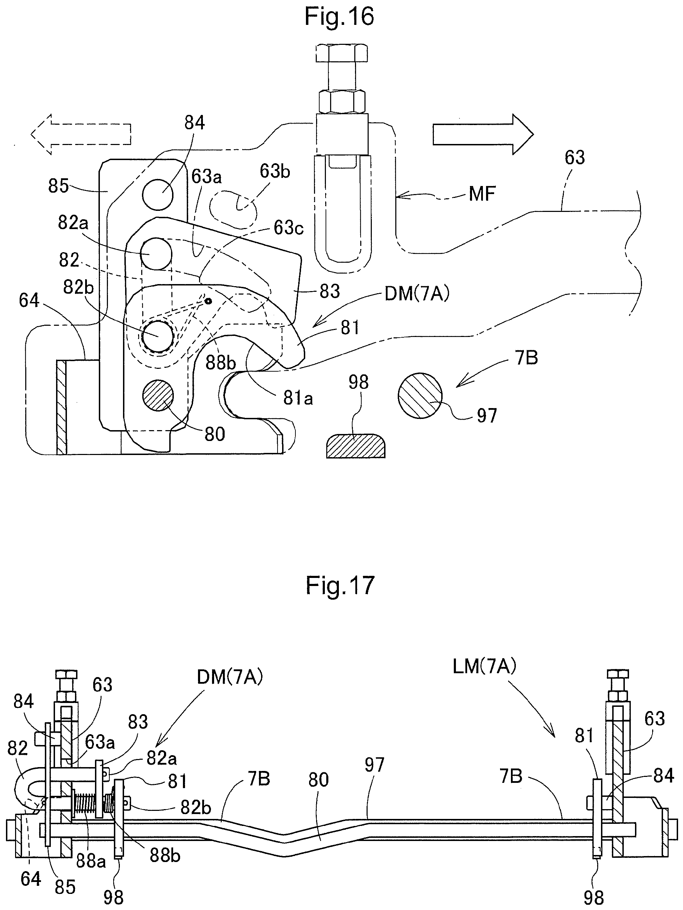

As illustrated in Figs. 16 to 21, the lock mechanism LM and the double lock mechanism DM include respective rotary members 81 configured to convert the movement of the intermediate frame MF relative to the blade housing 40 (relative movement) into rotational motion. The intermediate frame MF includes a long rod 80 (coupling rod) coupled to the rotary members 81, shared by the rotary members 81 as a support shaft, and coupling the rotary members 81 to each other. The rotary members 81 are each in the form of a crotch-like swing arm having a first end with an engagement section 81a engageable with the lock rod 97. The engagement section 81a serves as an engager for the second engagement unit 7B of the blade housing 40 with use of the rotational motion. The engagement section 81a is, for the present embodiment, a hook engageable with the lock rod 97 to lock the lock mechanism LM.

The double lock mechanism DM includes a slidable pin 82, a rotor 83, a lock body 84, and a swing lever 85. The rotor 83 is coupled to the corresponding rotary member 81 with use of the slidable pin 82 in an interlocked manner. The swing lever 85 is coupled to the long rod 80. The lock body 84 is configured to lock the corresponding rotary member 81 to the rotor 83 in response to a swing of the swing lever 85. The description below uses the term "lock position" to refer to the position of the lock body 84 locking the corresponding rotary member 81 to the rotor 83. Swinging the swing lever 85 moves the lock body 84 to the lock position.

The slidable pin 82 has a U shape and includes a first pin section 82a at a first end and a second pin section 82b at a second end. The first pin section 82a extends through an arc-shaped hole 63a in the corresponding link base 63 and is coupled to the rotor 83. The second pin section 82b extends through a through hole in the corresponding link base 63, and is coupled to the corresponding rotary member 81 and the rotor 83 in such a manner as to be capable of rotating and incapable of sliding in the axis direction (that is, the thrust direction).

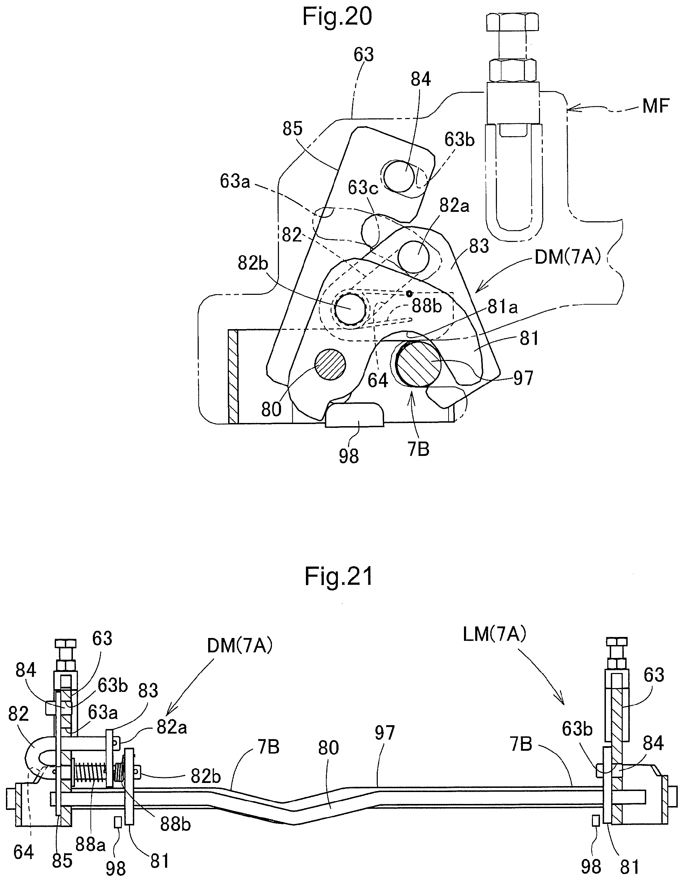

The swing lever 85 is slidable in the respective axial directions of the second pin section 82b and the long rod 80 together with the corresponding rotary member 81 and the rotor 83 with use of the slidable pin 82. The double lock mechanism DM includes a first spring 88a and a second spring 88b. The first spring 88a is in the form of a compression spring between the rotor 83 and the corresponding link base 63. The first spring 88a elastically urges the corresponding lock body 84 in a locking direction, that is, the direction in which the lock body 84 presses an outer face of the corresponding lock body 84 to maintain the locking state of the lock mechanism LM or doubly lock the coupling between the intermediate frame MF and the blade housing 40. The first and second springs 88a and 88b are each fitted around the first pin section 82a (see Figs. 17 and 21).

The second spring 88b is in the form of a torsion spring connected to the corresponding rotary member 81 and the rotor 83 and urging the rotary member 81 and the rotor 83, so that the rotary member 81 and the rotor 83 rotate in an interlocked manner due to the second spring 88b. The rotary member 81 is rotatable about the axis of the long rod 80, whereas the rotor 83 is rotatable about the axis of the second pin section 82b relative to the rotary member 81.

The swing lever 85 is rotatable about the axis of the long rod 80 together with the corresponding rotary member 81 and the rotor 83. The swing lever 85 has a notch to avoid coming into contact with the first pin section 82a of the slidable pin 82. The lock body 84 is fixed to an upper-end area of the swing lever 85, the area being opposite to a portion of the swing lever 85 through which portion the second pin section 82b extends.

The lock body 84 is in contact with the corresponding link base 63, which prevents the swing lever 85 or the lock body 84 from moving in the locking direction. The lock body 84 is configured to enter a through hole 63b in the link base 63. This allows the rotor 83 or the swing lever 85 to rotate toward a predetermined rotation angle position and slide to a locking position, that is, such a position as to maintain the locking state of the lock mechanism LM (double locking position).

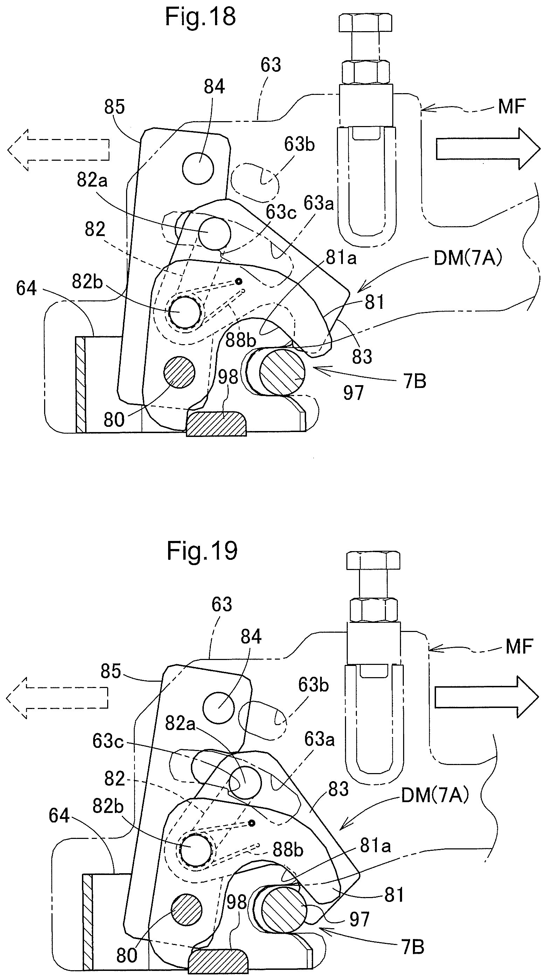

The corresponding rotary member 81 includes a protrusion. The second engagement unit 7B includes a press member 98 fixed to the blade housing 40. As the intermediate frame MF is moved relative to the blade housing 40 from the state illustrated in Fig. 16, the protrusion comes into contact with the press member 98 as illustrated in Figs. 18 and 19, thereby rotating the rotary member 81. As illustrated in Figs. 19 and 20, the movement of the intermediate frame MF relative to the blade housing 40 slides the corresponding lock body 84 to lock the lock mechanism LM and the double lock mechanism DM. The movement of the intermediate frame MF simultaneously slides the swing lever 85, the rotor 83, the corresponding rotary member 81, and the long rod 80 to separate the protrusion of the rotary member 81 from the press member 98, specifically, the lock body 84 being moved laterally (that is, in the direction orthogonal to the travel direction) to the locking position separates the protrusion from the press member 98.

Fig. 17 illustrates the lock mechanism LM and the double lock mechanism DM immediately before the lock mechanism LM and the double lock mechanism DM lock the coupling (that is, immediately before the intermediate frame MF becomes coupled to the blade housing 40). Fig. 21 illustrates the lock mechanism LM and the double lock mechanism DM each in the locking state. As illustrated in Figs. 17 and 21, the above-described lock mechanism LM and double lock mechanism DM on the left side are configured differently from those on the right side. Fig. 4 illustrates a mower unit 4 including a lock mechanism LM and a double lock mechanism DM on the left side and a lock mechanism LM and a double lock mechanism DM on the right side that are configured identically to the lock mechanism LM and the double lock mechanism DM on the left side.

The lock mechanism LM and the double lock mechanism DM on the left side differ in configuration from those on the right side. For such an embodiment, locking the left lock mechanism LM, maintaining the locking state of the left double lock mechanism DM (or doubly locking the coupling between the intermediate frame MF and the blade housing 40), and unlocking the lock mechanism LM or the double lock mechanism DM involve a rotation and a slide that cause the rotary member 81 of the right lock mechanism LM to rotate and slide through the long rod 80. This causes the right lock mechanism LM to lock and unlock the coupling, and also causes the right lock mechanism LM to lock the coupling and the right double lock mechanism DM to maintain the locking state and stop maintaining the locking state. The work machine may omit the right double lock mechanism DM to include a lock mechanism LM alone on the right side.

The description below deals with how the front link unit FL is coupled to the machine-side coupling unit 5C and to the blade housing 40, with reference to Figs. 7 to 11. As illustrated in Fig. 7, the mower-side coupling unit 5B is disposed on the front side plate 42 of the blade housing 40 for coupling the front link unit FL to the blade housing 40. As illustrated in Fig. 8, the machine-side coupling unit 5C is disposed near the front end of the main frame 10 for coupling the front link unit FL to the main frame 10.

The front link unit FL includes a link body 50, a mower coupler 50B on a first end of the link body 50, and a machine body coupler 50C on a second end of the link body 50. The mower coupler 50B is configured to become coupled to the mower-side coupling unit 5B, whereas the machine body coupler 50C is configured to become coupled to the machine-side coupling unit 5C. The link body 50 includes a front-left link 51a and a front-right link 51b each in the form of a round bar or round pipe bent at two positions and a plate-shaped link cross member 51c coupling the front-left link 51a to the front-right link 51b.

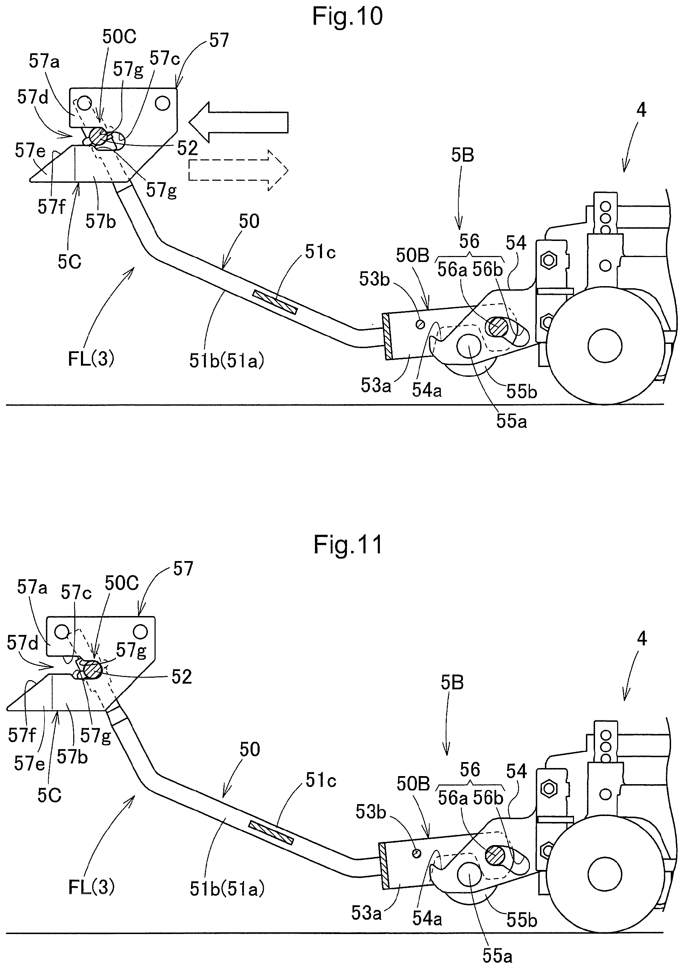

Figs. 8 to 11 illustrate a coupling process with a flow of coupling the machine body coupler 50C of the front link unit FL to the machine-side coupling unit 5C. The machine body coupler 50C is decoupled from the machine-side coupling unit 5C through a decoupling process with the reverse flow from Fig. 11 to Fig. 8.

The mower-side coupling unit 5B includes a pair of left and right plate-shaped front stays 54 bolted to a side plate 42 of the blade housing 40. The mower coupler 50B includes a pair of left and right U-shaped receiving brackets 53a each with opposite legs and a pair of left and right lateral pins 53b (stopper) each with opposite ends held by the respective legs of the corresponding receiving bracket 53a. The receiving brackets 53a each have a bottom with an outer face to which is fixed an end of the corresponding one of the front-left link 51a and the front-right link 51b.

The front stays 54 each have a tip with an upward protrusion having a holding depression 54a open upward in the upper face of the tip. The mower unit 4 includes a coupling module 56 configured to couple the receiving brackets 53a to the respective front stays 54 in such a manner that the mower coupler 50B is swingable. The coupling module 56 includes a pair of left and right arc-shaped guiding grooves 56b in respective central areas of the front stays 54 and a pair of left and right coupling shafts 56a each detachably insertable through the corresponding guiding groove 56b and respective holes in the legs of the corresponding receiving bracket 53a.

The front stays 54 each have a tip area with a hole. The mower unit 4 includes a roller shaft 55a with opposite ends insertable through the respective holes in the front stays 54 to be held by the front stays 54. The mower unit 4 includes an anti-scalp roller 55b at the middle of the roller shaft 55a. The receiving brackets 53a have respective internal spaces for receiving the respective front stays 54 such that the anti-scalp roller 55b is between the receiving brackets 53a. The legs of each receiving bracket 53a each have at a lower portion with a partial cutout to avoid contact with the roller shaft 55a.

The mower coupler 50B or the front link unit FL is at an angle to the ground (that is, an angle of vertical movement) which angle is limited by the position of each coupling shaft 56a in the corresponding guiding groove 56b. The guiding grooves 56b are each so shaped as to allow the lateral pin 53b of the corresponding receiving bracket 53a to be in the holding depression 54a in the corresponding front stay 54. With each lateral pin 53b in the corresponding holding depression 54a (that is, at a suitable swing angle), the machine body coupler 50C of the front link unit FL is positioned appropriately to be coupled to the machine-side coupling unit 5C. Driving the work machine forward to cause the front wheels 2a to climb over the blade housing 40 on the ground couples the machine-side coupling unit 5C to the front link unit FL (or the machine body coupler 50C). During the coupling process and the decoupling process, the machine body coupler 50C (or the front link unit FL) has an orientation depending on the position of each coupling shaft 56a in the corresponding guiding groove 56b.

The front link unit FL includes a lateral member 52 coupling the respective tips of the front-left link 51a and the front-right link 51b to each other and serving as the machine body coupler 50C at the tip of the front link unit FL. The machine-side coupling unit 5C is in the form of a pair of left and right coupling plates 57 each bolted to the main frame 10 and having a front-rear guide groove 57c in the form of a cutout. The coupling plates 57 each include an upper side portion 57a and a lower side portion 57b defining the cutout. The front-rear guide grooves 57c each extend in the front-rear direction relative to the body and have an opening 57d facing forward. Each lower side portion 57b includes a lower extension 57e extending forward therefrom and having an upper face inclined downward into the shape of a triangle. The upper face serves as an inclined guide face 57f for guiding the lateral member 52 toward the corresponding opening 57d. The left lower extension 57e is bent to the right along the line of coupling with the corresponding lower side portion 57b, whereas the right lower extension 57e is bent to the left along the line of coupling with the corresponding lower side portion 57b. The two lower extensions 57e are thus apart from each other by a gap that becomes narrower toward the tip in the front-rear direction relative to the body. This allows the front-rear guide grooves 57c to guide the lateral member 52 deeper from the respective openings 57d and stop the lateral member 52 at a predetermined position when the front wheels 2a climb over the blade housing 40 on the ground (climb-over movement).

The front-rear guide grooves 57c each have at the bottom a downward step 57g lower than the corresponding opening 57d. Passing the lateral member 52 from the openings 57d through the steps 57g to the bottom allows the receiving brackets 53a (or the mower coupler 50B) to be coupled to the respective front stays 54 (or the mower-side coupling unit 5B) in an appropriate orientation. Passing the lateral member 52 from the bottom through the steps 57g to the openings 57d allows the receiving brackets 53a (or the mower coupler 50B) to be decoupled from the respective front stays 54 (or the mower-side coupling unit 5B) in an appropriate orientation.

As described above, driving the work machine forward allows the machine body coupler 50C to become coupled to the machine-side coupling unit 5C. Driving the work machine (or mower) rearward allows the machine body coupler 50C to become decoupled automatically from the machine-side coupling unit 5C.

The attachment process includes automatically attaching the mower unit 4 to the work machine under the main frame 10 and automatically engaging the first engagement unit 7A of the intermediate frame MF with the second engagement unit 7B of the blade housing 40. The automatic engagement involves movements substantially identical to those of the lock mechanism LM and the double lock mechanism DM.

The description below deals with how the lock mechanism LM and the double lock mechanism DM move during the process of attaching the intermediate frame MF to the blade housing 40, with reference to Figs. 16 to 21.

The attachment process includes a first step of lowering the intermediate frame MF of the mower unit 4 to its lower limit position before the attachment of the mower unit 4 to a lower portion of the work machine and moving the swing lever 85 into a substantially upright position as illustrated in Fig. 16. This causes the mower unit 4 to be at such a position that the protrusion of each rotary member 81 is capable of coming into contact with the corresponding press member 98.

The attachment process includes the following second step: Driving the work machine forward and bringing the protrusion of each rotary member 81 into contact with the corresponding press member 98 causes the rotary member 81 to start rotating about the axis of the long rod 80 as illustrated in Fig. 18. The rotation of the rotary member 81 also rotates the rotor 83 and the slidable pin 82. The arc-shaped hole 63a guides the first pin section 82a. The arc-shaped hole 63a includes an alignment step 63c. The rotation of the swing lever 85 moves the first pin section 82a of the slidable pin 82 over the alignment step 63c. The alignment step 63c serves to align the respective rotation axes of the rotary member 81 and the slidable pin 82 with each other.

The attachment process includes a third step of, in response to the first pin section 82a moving over the alignment step 63c, the second spring 88b applying an urging force to the rotor 83 and the slidable pin 82 to rotate the rotor 83 and the slidable pin 82 about the axis of the second pin section 82b of the slidable pin 82.

The attachment process includes the following fourth step: The hook-shaped engagement section 81a of the rotating rotary member 81 and the rotor 83 hold the lock rod 97 therebetween to lock the lock mechanism LM. Further, the swing lever 85 rotating about the axis of the long rod 80 to a predetermined swing angle causes the lock body 84 to coincide with the through hole 63b in the corresponding link base 63. The first spring 88a applies an urging force to the lock body 84 to cause the lock body 84 to enter the through hole 63b and simultaneously slide the swing lever 85 in the axial direction. This locks the swing lever 85, thereby preventing rotation of the long rod 80, the rotary member 81, and the rotor 83. This is a doubly locked state, that is, the double lock mechanism DM maintaining the locking state of the lock mechanism LM.

The attachment process includes the following fifth step: The axial slide of the swing lever 85 also slides the rotary member 81 in the axial direction. This moves the engagement section 81a of the rotary member 81 apart from the press member 98, thereby finishing the attachment process. The attachment process is performed simultaneously with the above-described coupling process for coupling the machine body coupler 50C of the front link unit FL to the machine-side coupling unit 5C. This finishes the attachment of the mower unit 4 to the machine body.

The description below deals with how the lock mechanism LM and the double lock mechanism DM move during the process of decoupling the intermediate frame MF from the blade housing 40.

The decoupling process includes a first step of rotating the swing lever 85 counterclockwise to separate the engagement section 81a of the rotary member 81 from the press member 98 by a lateral gap.

The decoupling process includes a second step of pulling out the swing lever 85 until the engagement section 81a of the rotary member 81 is to the left of the press member 98.

The decoupling process includes the following third step: Rotating the swing lever 85 clockwise disengages the rotary member 81 and the rotor 83 from the lock rod 97. This causes the double lock mechanism DM to stop maintaining the locking state and unlocks the lock mechanism LM. The rotation of the swing lever 85 slides the long rod 80 laterally, which shifts the engagement section 81a of the rotary member 81 relative to the press member 98 in the direction in which the work machine travels. This prevents the engagement section 81a from coming into contact with the press member 98 in the direction in which the work machine travels.

Decoupling the machine body coupler 50C of the front link unit FL from the machine-side coupling unit 5C should preferably involve placing the mower unit 4 on the ground, causing the double lock mechanism DM to stop maintaining the locking state, and unlocking the lock mechanism LM. The driver should preferably drive the work machine rearward with the intermediate frame MF decoupled from the blade housing 40.

### Alternative Embodiments

The present invention is not limited to the configuration described in the above embodiment, and the following describes alternative embodiments of the present invention.
(1) The embodiment described above is configured such that the blade housing 40 includes guides 9B in the form of guide grooves 92 and that the intermediate frame MF includes guidable members 9A in the form of guidable pins 90 guidable through the respective guide grooves 92. The embodiment may be altered such that the blade housing 40 includes guidable members 9A and that the intermediate frame MF includes guides 9B. Further, the guides 9B and the guidable members 9A are not necessarily guide grooves 92 and guidable pins 90, but may be other mutually engageable members such as mutually fittable sleeves or a ball and a conical hole.
(2) The embodiment described above is configured such that the lock mechanism LM and double lock mechanism DM on the left side are configured differently from those on the right side. The embodiment may be altered such that the lock mechanism LM and double lock mechanism DM on the left side are configured substantially identically to those on the right side.
(3) The first spring 88a is in the form of a compression spring disposed around the slidable pin 82 and elastically urging the lock body 84 toward the lock position. The first spring 88a may alternatively be in the form of a spring of another type or be provided for something other than the slidable pin 82. The second spring 88b may also alternatively be in the form of a spring of another type or be provided for something other than the slidable pin 82.
(4) The embodiment described above is configured such that the intermediate frame MF includes a cover plate 70 as a cross member and that the motive power coupling unit 25 is fixed to the cover plate 70. The embodiment may be altered to include a cover plate 70 separately from a cross member for the intermediate frame MF.

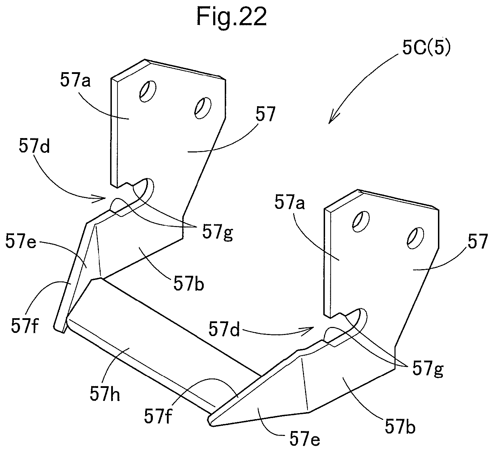

(5) Fig. 22 illustrates an alternative to the coupling plates 57 illustrated in Fig. 4. The alternative coupling plates 57 include a connecting plate 57h connecting the respective inner faces of the lower extensions 57e to each other for an increase in the strength of the coupling plates 57. The connecting plate 57h may have an upper face for guiding the lateral member 52 of the machine body coupler 50C.

The features of the embodiments described above (including other embodiments, which also apply hereinafter) may be combined with a feature disclosed in another embodiment, provided that such a combination does not result in a contradiction. The embodiments described in the present specification are illustrative and should not be construed as limiting the present invention. Modifications to the present invention are permissible, as long as they do not deviate from the scope that can achieve the objects of the present invention.

The present invention is applicable to not only engine-driven work machines but also work machines of various other types.

## Claims

1. A work machine including a body, a front wheel (2a), and a rear wheel (2b) to which work machine a mower unit (4) is attachable below the body and between the front wheel (2a) and the rear wheel (2b),
the work machine comprising:
a lifting and lowering link mechanism (3) including a front link unit (FL) and a rear link unit (RL) apart from each other in a front-rear direction relative to the body;
a front coupler (5C) provided for the body and configured to be coupled to a first end of the front link unit (FL);
a rear coupler (6B) provided for the body and configured to be coupled to a first end of the rear link unit (RL);
a blade housing (40) coupled to a second end of the front link unit (FL);
an intermediate frame (MF) coupled to a second end of the rear link unit (RL);
a first engagement unit (7A) provided for the intermediate frame (MF);
a second engagement unit (7B) provided for the blade housing (40) and engageable with the first engagement unit (7A); and
a lock mechanism (LM) configured to lock the engagement between the first engagement unit (7A) and the second engagement unit (7B) automatically in response to the front wheel (2a) climbing over the blade housing (40) to move the first engagement unit (7A) and the second engagement unit (7B) relative to each other.

2. The work machine according to claim 1, further comprising:
a double lock mechanism (DM) configured to maintain a locking state of the lock mechanism (LM) locking the engagement between the first engagement unit (7A) and the second engagement unit (7B) through a movement for maintaining the locking state of the lock mechanism (LM) in response to the lock mechanism (LM) being moved to lock the engagement automatically in response to the front wheel (2a) climbing over the blade housing (40).

3. The work machine according to claim 2, wherein
the lock mechanism (LM) includes a rotary member (81) rotatable in response to the relative movement,
the second engagement unit (7B) includes an engager,
the rotary member (81) includes an engagement section (81a) engageable with the engager in response to the rotation of the rotary member (81),
the lock mechanism (LM) is configured to lock the engagement between the engagement section (81a) and the engager for the locking state, and
the double lock mechanism (DM) includes:
a rotor (83) rotatable in synchronization with the rotation of the rotary member (81); and
a lock body (84) movable into a lock position in response to the rotation of the rotor (83) in which lock position the lock body (84) locks the rotary member (81) such that the double lock mechanism (DM) maintains the locking state.

4. The work machine according to claim 3, wherein
the lock body (84) is elastically urged toward the lock position and is in the lock position with the rotor (83) at a predetermined rotation angle position.

5. The work machine according to claim 3 or 4, wherein
the second engagement unit (7B) includes a press member (98) fixed to the blade housing (40), and
the rotary member (81) is rotatable through contact with the press member (98) and movable off the press member (98) in response to the lock body (84) being moved into the lock position.
